# EUROPEAN PATENT APPLICATION

(11) **EP 3 709 668 A1**
(43) Date of publication of application: **16.09.2020**
(21) Application number: 19739500.7
(22) Date of filing: 26.06.2019
(51) Int. Cl.: H04N 21/442

(54) **STANDBY MODE SWITCHING METHOD AND DEVICE, ELECTRONIC APPARATUS, AND STORAGE MEDIUM**

(30) Priority: 02.02.2019 CN 201910106976
(71) Applicant: Shenzhen Skyworth-RGB Electronic Co., Ltd., Shenzhen, Guangdong 518057 (CN)
(72) Inventor: LI, Jian, Shenzhen, Guangdong 518057 (CN); YU, Minghuo, Shenzhen, Guangdong 518057 (CN); HONG, Wensheng, Shenzhen, Guangdong 518057 (CN); Wang, Dechuang, Shenzhen, Guangdong 518057 (CN)
(74) Representative: Osterhoff, Utz
(86) International application number: PCT/CN2019/093058
(87) International publication number: WO 2020/155537

(57) **Abstract**

Disclosed are a standby mode switching method, a standby mode switching device, an electrical apparatus and a storage medium. The method includes: detecting whether there is a person in a current environment, when a television system is detected in a full-time AI standby mode; and switching the television system to a low-power standby mode from the full-time AI standby mode, if there is no person in the current environment, where energy consumption of the television system in the low-power standby mode is lower than energy consumption of the television system in the full-time AI standby mode. By this way, the standby energy consumption of the television system is reduced, without affecting user's use of the AI function.

## Description

### FIELD

The present disclosure relates to the field of smart television, and more particularly relates to a standby mode switching method, a standby mode switching device, an electrical apparatus, and a storage medium.

### BACKGROUND

Artificial Intelligence (AI) has become the hotspot of intelligent products. More and more intelligent products employ AI voice to bring users convenience. For example, a television using AI voice allows users to control the television by voices, thus troublesome operations of the remote controller is avoided. Some television manufactures have developed a full-time AI function, which bring users a new understanding of the TV voice function.

The full-time AI refers to that the television can respond at any time to user's voice commands, such as playing a music, given that the AC power of the television is not cut off. That is, the television is in a full-time AI standby mode when the television is merely turned off by a remote controller, during which the television can still respond to user's voice commands, but cannot display corresponding pictures. In the full-time AI standby mode, energy consumption is not stopped because the television is still working. However, the AI function of the television is not always needed by users, thus the television remaining in the full-time AI standby mode all times would cause a waste of energy.

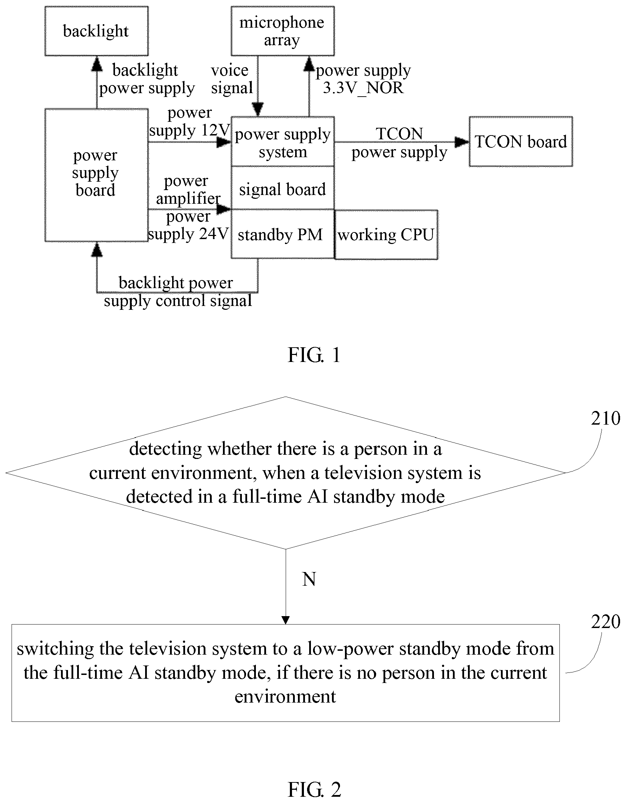

FIG. 1 is a diagram illustrating a power supply architecture of a television system. As shown in FIG. 1, a power supply board converts an AC voltage into a DC voltage followed by stepping up or stepping down the DC voltage to provide power to signal boards and a power amplifier. The power supply board also provides a constant current to a backlight. The power supply system designed on the signal board further steps down the voltage (e.g., 12V) to power-up the Power Management (PM) system, the CPU, the signal board, and a microphone array of a voice sampling module. The power supply system designed on the signal board also provides the voltage (e.g., 12V) to a TCON board by controlling a switch. The power supply system generates a 3.3V_STB voltage and a 3.3V_NOR voltage. The 3.3V_STB voltage is the voltage required for the signal board, the CPU, and other related IO ports in the standby state. The 3.3V_NOR voltage is the voltage required for the signal boards and the CPU in the normal working state. When the television is powered-on normally, the backlight, the signal board, and the TCON board are powered-up normally; the signal board and the CPU work normally; the television system receive voice signals of the microphone array, and perform corresponding actions according to the voice signals, and pictures are displayed normally. When the television is in the full-time AI standby mode, the backlight power supply and the TCON power supply are turned off; the signal board and the CPU work normally; the television system can receive voice signals of the microphone array, and perform corresponding actions according to the voice signals, but pictures cannot be displayed. Since the signal board and the CPU are both in the normal working state in the full-time AI standby mode of the television, energy consumed by the signal board and the CPU amounts to about 10W, according to an actual test. Based on an assumption that a total of non-using time of the television is 12 hours per day per family and there are millions of families, energy consumption would be nearly 400 million degrees a year, resulting in a huge waste of resources.

### SUMMARY

The present disclosure is to provide a standby mode switching method, a standby mode switching device, an electrical apparatus, and a storage medium, aiming to reduce energy consumption of the television in the standby mode.

According to an aspect, the present disclosure provides a standby mode switching method. The standby mode switching method includes:
detecting whether there is a person in a current environment, when a television system is detected in a full-time AI standby mode; and
switching the television system to a low-power standby mode from the full-time AI standby mode, if there is no person in the current environment;
where an energy consumption of the television system in the low-power standby mode is lower than that of the television system in the full-time AI standby mode.

According to another aspect, the present disclosure provides a standby mode switching device. The standby mode switching device includes:
a person detection module, configured to detect whether there is a person in a current environment, when a television system is detected in a full-time AI standby mode; and
a first mode switching module, configured to switch the television system to a low-power standby mode from the full-time AI standby mode, if there is no person in the current environment;
where an energy consumption of the television system in the low-power standby mode is lower than that of the television system in the full-time AI standby mode.

According to still another aspect, the present disclosure provides an electrical apparatus. The electrical apparatus includes a memory, a processor, a computer program stored in the memory and executable by the processor, and an environment detection microphone circuit. The computer program when being executed by the processor performs the standby mode switching methods according to any one of the embodiments in the present disclosure.

According to still another aspect, the present disclosure provides a storage medium including computer executable instructions. The computer executable instructions when being executed by a processor perform the standby mode switching methods according to any one of the embodiments in the present disclosure.

In the present disclosure, when the television system is in the full-time AI standby mode, the AI function of the television is considered not to be used if there is no person in the vicinity of the television, and in this case the television system is switched to the low-power standby mode from the full-time AI standby mode, where the energy consumption of the television system in the low-power standby mode is lower than that in the full-time AI standby mode. By this way, without affecting user's use of the AI function, the standby energy consumption of the television system can be reduced.

### BRIEF DESCRIPTION OF THE FIGURES

In order to illustrate the technical solution in the embodiments of the present disclosure or the prior art more clearly, brief description would be made below to the drawings required in the embodiments of the present disclosure or the prior art. Obviously, the drawings in the following description are merely some of the embodiments of the present disclosure, and those skilled in the art could obtain other drawings according to the structures shown in the drawings without any creative efforts.
FIG. 1 is a diagram illustrating a power supply architecture of a television system;
FIG. 2 is a flowchart diagram illustrating a standby mode switching method according to a first embodiment of the present disclosure;
FIG. 3 is a diagram illustrating a power supply architecture of a television system according to a first embodiment of the present disclosure;
FIG. 4 is a diagram illustrating an environment detection microphone circuit according to a first embodiment of the present disclosure;
FIG. 5 is a flowchart diagram illustrating a standby mode switching method according to a second embodiment of the present disclosure;
FIG. 6 is a structure diagram illustrating a standby mode switching device according to a third embodiment of the present disclosure;
FIG. 7 is a structure diagram illustrating an electrical apparatus according to a fourth embodiment of the present disclosure.

The realizing of the aim, functional characteristics and advantages of the present disclosure are further described in detail with reference to the accompanying drawings and the embodiments.

### DETAILED DESCRIPTION OF THE EMBODIMENTS

The technical solutions in the embodiments of the present disclosure will be described clearly and completely combining the drawings in the embodiments of the present disclosure. Obviously, the described embodiments are only a part of the embodiments of the present disclosure, but not all of them. Based on the embodiments in the present disclosure, all other embodiments obtained by those skilled in the art without creative work shall belong to the protection scope of the present disclosure.

### EMBODIMENT 1

FIG. 2 is a flowchart diagram illustrating a standby mode switching method according to a first embodiment of the present disclosure. The standby mode switching method in this embodiment may be implemented by a standby mode switching device. The standby mode switching device may be realized by software and/or hardware, which is generally integrated in a terminal having the AI function, such as a smart television having the AI function. Referring to FIG. 2, the standby mode switching method includes:

Step 210, detecting whether there is a person in a current environment, when a television system is detected in a full-time AI standby mode, and proceeding to step 220 if there is no person in the current environment.

Specifically, whether the television system is in the full-time AI standby mode may be detected based on a mode identifier bit. The mode identifier bit used for identifying the current working mode of the television system is set in a system program. Different values of the mode identifier bit represent different working modes of the television system. The working modes of the television system includes: power-on mode, full-time AI standby mode, and low-power standby mode. The power-on mode refers to that all voltages of the television system, including those of a backlight, a signal board and a TCON board, are in normal power supplying state, the signal board and the CPU are in normal working state, the television system receives voice signals of a microphone array, and performs corresponding actions according to the voice signals, thus pictures can be normally displayed. Or alternatively, a common understanding of the power-on mode is that in which a person is watching programs or videos on the television. When the television system is in the full-time AI standby mode, the power supplies of the backlight and the TCON board are turned off, the signal board and the CPU are in normal working state, the television system receives voice signals of the microphone array and performs corresponding actions according to the voice signals, but pictures cannot be displayed. And when the television system is in the low-power standby mode, a power management system PM on the signal board is powered, while most of other power supplies of the television system are turned off, the microphone array is also powered off, and in this case the television system cannot receive voice signals and perform corresponding actions according to the voice signals, thus pictures cannot be displayed. The television system is in a true standby mode when in the low-power standby mode, and the energy consumption of the television system is the lowest.

For example, the operation of detecting whether there is a person in the current environment includes:

detecting whether there is a person in the current environment based on an output signal of an environment detecting microphone circuit; and

determining there is a person in the current environment when the output signal of the environment detection microphone circuit is at high level, determining there is no person in the current environment when the output signal of the environment detection microphone circuit is at low level.

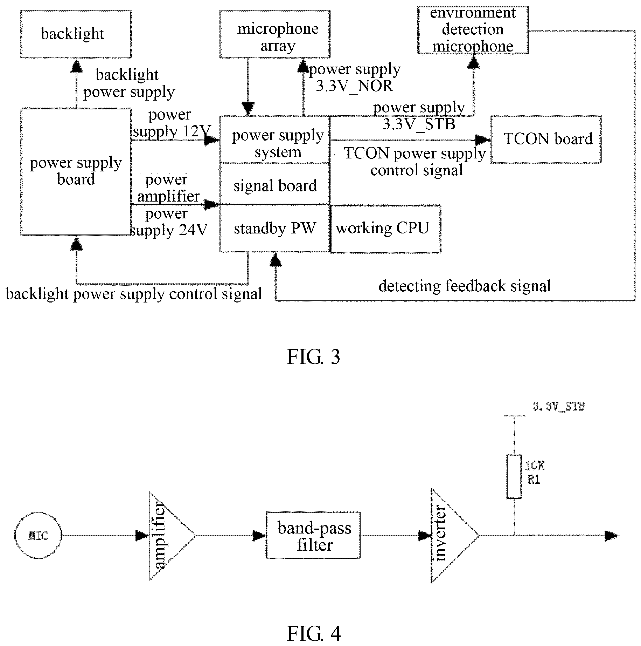

The environment detection microphone circuit is integrated in the television system, and it may be an independent circuit, or an improved circuit of the microphone array. When the television system is in the full-time AI standby mode, at least one microphone in the environment detection microphone circuit is powered, so as to detect the voice signals in the current environment, thereby realizing the detection of whether a person being in the current environment. As shown in FIG. 3, when the television system is in the full-time AI standby mode, the environment detection microphone circuit is powered by a standby voltage 3.3V_STB.

FIG. 4 is a diagram illustrating an environment detection microphone circuit. The environment detection microphone circuit includes a microphone, an amplifier, a band-pass filter, and an inverter. The microphone is connected to the amplifier, which is configured to sense a sound signal in the environment, generate a corresponding electrical signal based on the sound signal, and send the electrical signal to the amplifier. The microphone may be a ceramic piezoelectric microphone, or other types of sound sensors. The microphone generates the electrical signal when there is the sound signal in the environment. The amplifier is connected to the band-pass filter, which is configured to amplify the received electrical signal and transmit the amplified electrical signal to the band-pass filter. The band-pass filter is connected to the inverter, which is configured to block an electrical signal in the amplified electrical signals at a preset frequency, and send an electrical signal in the amplified electrical signals not at the preset frequency to the inverter. The band-pass filter allows a certain range of frequencies of the amplified electrical signals to pass through, and the range of frequencies may be determined according to a frequency range of the human voice. For example, the frequency may range from 85HZ to 1100HZ, in order to reduce environmental noise (such as the impacts of car whistle, machine construction sound). The inverter is configured to reverse the received electrical signal and output the reversed electrical signal. When there is no person in the current environment, the microphone does not generate the electrical signal, and thus no voltage is transmitted to an input end of the inverter. The output end of the inverter is connected to the standby voltage 3.3V_STB via a pull-up resistor R1, thus, when there is no person in the current environment, the output end of the inverter outputs a high level signal which indicates that there is no one in the current environment. In case that someone in the current environment makes a sound, the microphone generates the electric signal, and thus the voltage is transmitted to the input end of the inverter, and the output end of the inverter outputs a low level signal which indicates that there is someone in the current environment.

Step 220, switching the television system to the low-power standby mode from the full-time AI standby mode.

The television system can respond to user's voice commands at any time when in the full-time AI standby mode, thereby allowing the user to conveniently enjoy the AI function. To reduce the standby energy consumption without affecting user's use of the full-time AI function, the television system is switched to the low-power standby mode, when the television system is detected to be in the full-time AI standby mode and no one is detected in the current environment.

For example, the switching from the full-time AI standby mode to the low-power standby mode includes: turning off a power supply to a preset module in the television system. The preset modules include: a backlight, a microphone array, a TCON board, a CPU, and most of circuit blocks on the signal board, while only the power management PM system on the signal board remains being powered and is controlled to be in a high light-load efficiency mode. In the low-power standby mode, the power supplies of most modules in the television system are turned off, and the CPU is also out of operation, while only the PM system is powered with a standby power supply voltage. And in this case, the standby power of the television system can be reduced to 0.5W.

Further, in order to avoid frequent switching between the full-time AI standby mode and the low-power standby mode, the operation of switching the television system from the full-time artificial intelligence standby mode to a low-power standby mode, if there is no person in the current environment includes:

switching the television system from the full-time AI standby mode to the low-power standby mode, if a time duration during which there is no person in the current environment reaches a preset threshold.

In the standby mode switching method according to this embodiment, when the television system is in the full-time AI standby mode, the AI function of the television is considered not to be used if there is no person in the vicinity of the television, and in this case the television system is switched to the low-power standby mode from the full-time AI standby mode, where the energy consumption of the television system in the low-power standby mode is lower than that in the full-time AI standby mode. By this way, without affecting user's use of the AI function, the standby energy consumption of the television system is reduced.

### EMBODIMENT 2

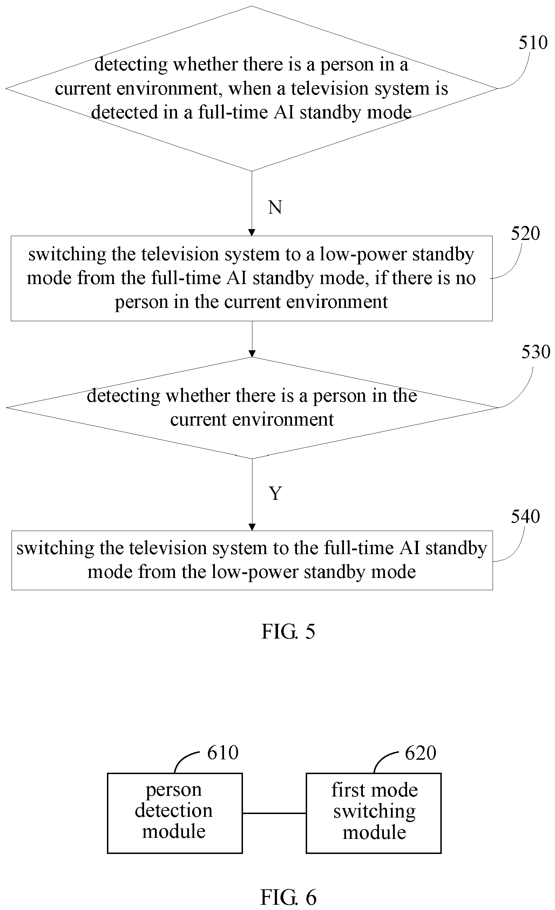

FIG. 5 is a flowchart diagram illustrating a standby mode switching method according to a second embodiment of the present disclosure. This embodiment is improved based on the above-described embodiment, the standby mode switch method including: switching the television system to the full-time AI standby mode if a person is detected in the current environment, so as not to affect user's use of the AI function, thereby improving the intelligence of the television system, reducing the energy consumption of the television system, as well as improving user experience. As shown in FIG. 5, the method includes:

Step 510, detecting whether there is a person in the current environment when the television system is detected to be in the full-time AI standby mode, and proceeding to step 520 if there is no person in the current environment.

The television system remains in the full-time AI standby mode, if there is a person in the current environment.

Step 520, switching the television system from the full-time AI standby mode to the low-power standby mode.

The energy consumption of the television system in the low-power standby mode is lower than that of the television system in the full-time AI standby mode.

Step 530, detecting whether there is a person in the current environment, and proceeding to step 540 if there is a person in the current environment.

If there is no one in the current environment, the television system remains in the low power standby mode. And if there is someone in the current environment, the television system is switched to the full time AI standby mode from the low power standby mode.

Step 540, switching the television system from the low power standby mode to the full time AI standby mode.

Further, in order to avoid frequent switching between the full-time AI standby mode and the low-power standby mode, the television system is switched to the full-time AI standby mode if a time duration during which there is a person in the current environment reaches a preset threshold.

In the standby mode switching method provided in this embodiment, when the television system is in the full-time AI standby mode, the AI function of the television is considered not to be used if there is no person in the vicinity of the television, and in this case the television system is switched to the low-power standby mode; the television system remains in the full-time AI standby mode if there is a person in the vicinity of the television. And when the television system is in the low-power standby mode, the television system is switched to the full-time AI standby mode if a person is detected in the vicinity of the television. As such, without affecting user's use of the AI function, the intelligence of the television system is improved, and the energy consumption of the television system is reduced.

### EMBODIMENT 3

FIG. 6 is a structure diagram illustrating a standby mode switching device according to a third embodiment of the present disclosure. As shown in Fig. 6, the standby mode switching device includes: a person detection module 610 and a first mode switching module 620.

The person detection module 610 is configured to detect whether there is a person in a current environment, when a television system is detected in a full-time AI standby mode.

The first mode switching module 620 is configured to switch the television system to a low-power standby mode from the full-time AI standby mode, if there is no person in the current environment.

The energy consumption of the television system in the low-power standby mode is lower than that of the television system in the full-time AI standby mode.

Further, the first mode switching module 620 is configured to switch the television system to the low-power standby mode from the full-time AI standby mode, if a time duration during which there is no person in the current environment reaches a preset threshold.

The standby mode switching device includes the first mode switching module, which is further configured to switch the television system to the full-time AI standby mode if a person is detected in the current environment, after the television system is switched to the low-power standby mode.

The first mode switching module 620 is further configured to turn off a power supply to a preset module in the television system.

The person detection module 610 is further configured to:

detect whether there is a person in the current environment based on an output signal of an environment detecting microphone circuit; and

determine there is a person in the current environment when the output signal of the environment detection microphone circuit is at high level, and determine there is no person in the current environment when the output signal of the environment detection microphone circuit is at low level.

The environmental detection microphone circuit is integrated in the television system.

The environment detection microphone circuit further includes: a microphone, an amplifier, a band-pass filter and an inverter.

The microphone is connected to the amplifier, which is configured to sense a sound signal in the environment, generate a corresponding electrical signal based on the sound signal, and send the electrical signal to the amplifier.

The amplifier is connected to the band-pass filter, which is configured to amplify the received electrical signal, and transmit the amplified electrical signal to the band-pass filter.

The band-pass filter is connected to the inverter, which is configured to allow a preset range of frequencies of the amplified electrical signal to pass through while block the others, and send the electrical signal that passes through the band-pass filter to the inverter.

The inverter is configured to reverse the received electrical signal and output the reversed electrical signal.

Further, whether the television system is in the full-time AI standby mode is detected based on a mode identifier bit.

In the standby mode switching device according to this embodiment, when the television system is in the full-time AI standby mode, the AI function of the television is considered not to be used if there is no person in the vicinity of the television, and in this case the television system is switched to the low-power standby mode from the full-time AI standby mode, where the energy consumption of the television system in the low-power standby mode is lower than that in the full-time AI standby mode. By this way, the standby energy consumption of the television system is reduced, without affecting user's use of the AI function.

The standby mode switching device in this embodiment performs the standby mode switching method provided in any of the embodiments in the present disclosure, and has functional modules corresponding to the functionalities of the method, thus can achieve identical beneficial effects. The technical features that are not detailed in this embodiment may refer to the standby mode switching method provided in any of the embodiments in the present disclosure.

### EMBODIMENT 4

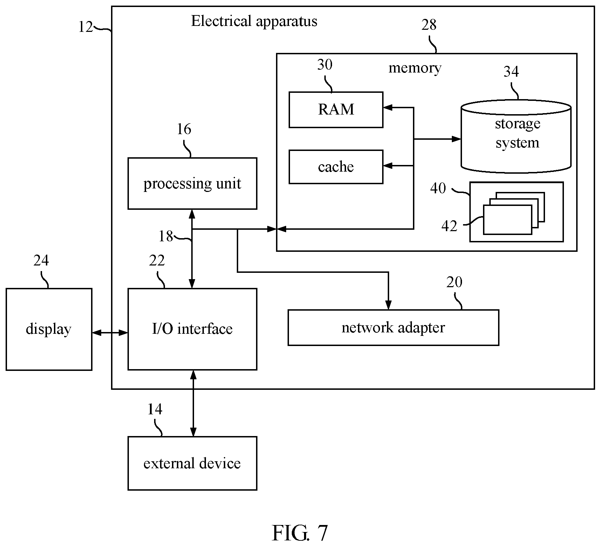

FIG. 7 is a structure diagram illustrating an electrical apparatus according to a fourth embodiment of the present disclosure. The electrical apparatus 12 shown in FIG. 7 is merely an example and should not impose any limitation on the function and scope of the embodiments of the present disclosure.

As shown in FIG. 7, the electrical apparatus 12 is embodied in a form of a general computing apparatus. The electrical apparatus 12 includes but is not limited to, one or more processors or processing units 16, a system memory 28, and a bus 18 that is configured to connect system components (including the system memory 28 and the processing units 16).

The bus 18 represents one or more of various types of bus structures, including a memory bus or a memory controller, a peripheral bus, a graphics acceleration port, a processor, or a local bus using any of the various types of the bus structures. For example, the architectures include but are not limited to, an Industry Standard Architecture (ISA) bus, a Micro Channel Architecture (MAC) bus, an Enhanced ISA bus, a Video Electronics Standards Association (VESA) local bus, and a Peripheral Component Interconnects ( PCI) bus.

The electrical apparatus 12 may typically include various computer readable mediums. These mediums may be any of available mediums accessible by the electrical apparatus 12, including a volatile medium and a non-volatile medium, a removable medium and a non-removable medium.

The system memory 28 may include the computer readable medium in the form of the volatile memory, such as a random access memory (RAM) 30 and/or a cache memory 32. The electrical apparatus 12 may further include other removable/non-removable, volatile/non-volatile computer storage medium. For example, the storage system 34 may be used to read and write the non-removable, non-volatile magnetic medium (not shown in FIG. 7, which is commonly referred to as "hard disk driver"). Although not shown in FIG. 7, the disk driver for reading and writing the removable non-volatile disk (such as a "floppy disk"), and the CD-ROM driver for reading and writing the removable non-volatile CD-ROM (such as a CD-ROM, DVD-ROM) may be provided. In these cases, each driver may be connected to the bus 18 via one or more data medium interfaces. The memory 28 may include at least one program product having a set of program modules (e.g., a person detection module 610 and a first mode switching module 620 in the standby mode switching device), and the program modules are configured to implement the functions of the embodiments.

A program/utility 40 having the set of program modules 42 (e.g., the person detection module 610 and the first mode switching module 620 in the standby mode switching device) may be stored, for example, in the memory 28. The program module 42 includes but not limited to the operation system, one or more applications, other program modules, and program data. Each of these or some combinations of these may include an implementation of a network environment. The program module 42 typically performs the functions and/or methods of the described embodiments of the present disclosure.

The electrical apparatus 12 may also be in communication with one or more external device 14 (e.g., a keyboard, a pointing device, an environmental detection microphone circuit, etc.) and a display 24, as well as with one or more devices that enable users to interact with the electrical apparatus 12. And/or in communication with any device (e.g., a network card, modem, etc.) that enables the electrical apparatus 12 to communicate with one or more other computing devices. This communication can be performed via an input/output (I/O) interface 22. In addition, the electrical apparatus 12 can communicate with one or more networks (e.g., a local area network, a wide area network, and/or a public network, such as the Internet) via the network adapter 20. As shown, the network adapter 20 is communicated with other modules in the electrical apparatus 12 through the bus 18. It should be understood that although not shown in the figures, other hardware and/or software modules may be utilized in combination with the electrical apparatus 12, including but not limited to: microcode, a device driver, a redundant processing unit, an external disk driver array, a RAID system, a tape driver, and a data backup storage systems, etc.

The processing unit 16 runs the program stored in the system memory 28, so as to implement various functions and data processing, such as the standby mode switching method provided in the embodiment. The standby mode switching method includes:

detecting whether there is a person in a current environment, when a television system is detected in a full-time AI standby mode; and

switching the television system to a low-power standby mode from the full-time AI standby mode, if there is no person in the current environment;

where the energy consumption of the television system in the low-power standby mode is lower than that of the television system in the full-time AI standby mode.

The processing unit 16 runs the program stored in the system memory 28, so as to implement various functions and data processing, such as the standby mode switching method provided in the present disclosure.

It can be understood that the processor can realize the technical solutions of any of the standby mode switching methods provided in the present disclosure.

### EMBODIMENT 5

A fifth embodiment of the present disclosure provides a computer readable storage medium storing a computer program, and the computer program when being executed by a processor performs the standby mode switching method provided in the embodiments of the present disclosure. The standby mode switching method includes:

detecting whether there is a person in a current environment, when a television system is detected in a full-time artificial intelligence (AI) standby mode;

switching the television system to a low-power standby mode from the full-time AI standby mode, if there is no person in the current environment.

The energy consumption of the television system in the low-power standby mode is lower than that of the television system in the full-time AI standby mode.

It should be noted that the computer program stored in the computer readable storage medium is not limited to perform the operations in the method as described above, it can also perform operations related to the method.

The computer storage medium in the embodiment of the present disclosure may use any combination of one or more computer readable mediums. The computer readable medium may be a computer readable signal medium or a computer readable storage medium. The computer readable storage medium may include, but not limited to, an electronic, magnetic, optical, electromagnetic, infrared, or semiconductor system, apparatus, or device, or any combination of the above. More specific examples (a non-exhaustive list) of the computer readable storage media include: electrical connections having one or more wires, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above. In the present disclosure, the computer readable storage medium may be any tangible medium that contains or stores the program, and the program may be used by an instruction execution system, an apparatus or a device, or be used by the combination of the above.

A computer readable signal medium may include data signals that are propagated in a baseband or as part of a carrier, which carry the computer readable program code. These propagated data signals may use a variety of forms including, but not limited to, an electromagnetic signal, an optical signal, or any suitable combination of the above. The computer readable signal medium may also be any computer readable medium other than the computer readable storage medium, which can transmit, propagate, or transport a program for use by the instruction execution system, the apparatus, or the device.

The program code embodied on the computer readable medium may be transmitted by any suitable medium, including but not limited to wireless, wire, fiber optic cable, RF, etc., or any suitable combination of the above.

The computer program code for implementing the operations of the present disclosure may be written in one or more programming languages, or a combination thereof, including an object oriented programming language such as Java, Smalltalk, C++, and conventional procedural programming language - such as the "C" language or a similar programming language. The program code may be executed entirely on the user's computer, partly on the user's computer, as a stand-alone software package, partly on the user's computer and partly on a remote computer, or entirely on the remote computer or server. The remote computer may be connected to the user's computer through any kind of network, including a local area network (LAN) or a wide area network (WAN), or may be connected to an external computer (e.g., via the Internet connection by using an Internet service provider).

The foregoing description merely portrays some illustrative embodiments in accordance with the present disclosure and therefore is not intended to limit the patentable scope of the disclosure. Any equivalent structure or flow transformations that are made taking advantage of the specification and accompanying figures of the present disclosure and any direct or indirect disclosures thereof in other related technical fields shall all fall in the scope of protection of the present disclosure.

## Claims

1. A standby mode switching method, **characterized in that**, the method comprises:
detecting whether there is a person in a current environment, when a television system is detected in a full-time AI standby mode; and
switching the television system to a low-power standby mode from the full-time AI standby mode, if there is no person in the current environment;
wherein, an energy consumption of the television system in the low-power standby mode is lower than an energy consumption of the television system in the full-time AI standby mode.

2. The method of claim 1, **characterized in that**, switching the television system to the low-power standby mode from the full-time AI standby mode if there is no person in the current environment, comprises:
switching the television system to the low-power standby mode from the full-time AI standby mode, if a time duration during which there is no person in the current environment reaches a preset threshold.

3. The method of claim 1 or 2, **characterized in that**, after switching the television system to the low-power standby mode from the full-time AI standby mode, the method further comprises:
switching the television system to the full-time AI standby mode, if a person is detected in the current environment.

4. The method of any one of claims 1 to 3, **characterized in that**, switching the television system to the low-power standby mode from the full-time AI standby mode, comprises:
turning off a power supply to a preset module in the television system.

5. The method of any one of claims 1 to 3, **characterized in that**, detecting whether there is a person in a current environment, comprises:
detecting whether there is a person in the current environment based on an output signal of an environment detecting microphone circuit; and
determining there is a person in the current environment when the output signal of the environment detection microphone circuit is at high level, and
determining there is no person in the current environment when the output signal of the environment detection microphone circuit is at low level;
wherein, the environmental detection microphone circuit is integrated in the television system.

6. The method of claim 5, **characterized in that**, detecting whether there is a person in the current environment based on an output signal of an environment detecting microphone circuit, further comprises:
receiving a voltage, reversing the received voltage, and outputting the reversed voltage, by an inverter.

7. The method of any one of claims 1 to 3, **characterized in that**, the method further comprises:
detecting whether the television system is in the full-time AI standby mode based on a mode identifier bit.

8. The method of any one of claims 1 to 3, **characterized in that**, the method further comprises:
receiving a user voice command, and responding the user voice command based on the full-time AI standby mode.

9. A standby mode switching device, **characterized in that**, the device comprises:
a person detection module, configured to detect whether there is a person in a current environment, when a television system is detected in a full-time AI standby mode; and
a first mode switching module, configured to switch the television system to a low-power standby mode from the full-time AI standby mode, if there is no person in the current environment;
wherein, an energy consumption of the television system in the low-power standby mode is lower than an energy consumption of the television system in the full-time AI standby mode.

10. The device of claim 9, **characterized in that**, the person detection module comprises an environment detection microphone circuit comprising a microphone, an amplifier, a band-pass filter and an inverter.

11. The device of claim 10, **characterized in that**, the microphone is connected to the amplifier, and is configured for sensing a sound signal in the environment, generating a corresponding electrical signal based on the sound signal, and sending the electrical signal to the amplifier.

12. The device of claim 10, **characterized in that**, the amplifier is connected to the band-pass filter, and is configured for amplifying the received electrical signal and transmitting the amplified electrical signal to the band-pass filter.

13. The device of claim 10, **characterized in that**, the band-pass filter is connected to the inverter, and is configured for blocking an electrical signal in the amplified electrical signals at a preset frequency, and sending an electrical signal in the amplified electrical signals not at the preset frequency to the inverter.

14. The device of claim 13, **characterized in that**, the inverter is configured for reversing the received electrical signal and outputting the reversed electrical signal at an output end.

15. An electrical apparatus, comprising a memory, a processor, and a computer program executable by the processor and stored in the memory, **characterized in that**, the electrical apparatus further comprises an environment detection microphone circuit, the computer program when being executed by the processor performs the steps of the standby mode switching method according to any one of claims 1 to 8.

16. A storage medium, storing computer executable instructions, the computer executable instructions when being executed by a processor perform the steps of the standby mode switching method according to any one of claims 1 to 8.
